# EUROPÄISCHE PATENTSCHRIFT

(11) **EP 2 548 733 B1**
(45) Veröffentlichungstag und Bekanntmachung des Hinweises auf die Patenterteilung: **12.02.2014**
(21) Anmeldenummer: 12177066.3
(22) Anmeldetag: 19.07.2012
(51) Int. Cl.: B32B 17/10, B32B 27/06, B32B 27/08

(54) **Folienlaminate mit Dämpfungseigenschaften enthaltend eine Teilschicht aus weichmacherhaltigem Polyvinyl(iso)acetal**
Film laminates with damping characteristics containing a sub-layer of polyvinyl(iso)acetal containing plasticizers
Laminés de pellicules dotés de propriétés adaptées à l'évaporation et comprenant une couche partielle de polyvinyle(iso)acétal comprenant du plastifiant

(30) Priorität: 22.07.2011 EP 11175084
(43) Veröffentlichungstag der Anmeldung: 23.01.2013
(73) Patentinhaber: Kuraray Europe GmbH, 65795 Hattersheim (DE)
(72) Erfinder: Beekhuizen, Jan, Dr., 53844 Troisdorf (DE); Frank, Michael, Dr., 55129 Mainz (DE); Keller, Uwe, Dr., 53177 Bonn (DE); Meise, Markus, Dr., 68259 Mannheim (DE); Steuer, Martin, Dr, 65835 Liederbach (DE)
(74) Vertreter: Kisters, Michael Marcus

(56) Entgegenhaltungen:
- WO-A1-2011/024788
- WO-A1-2011/078314
- WO-A1-2011/081190
- WO-A2-2006/102049
- JP-A- 2011 042 552

## Beschreibung

### Technisches Gebiet

Die Erfindung betrifft eine z.B. als Zwischenschicht in Verbundsicherheitsgläsern geeignetes Folienlaminat, das aus mindestens drei Schichten auf der Basis von weichmacherhaltigen Polyvinyl(n)acetalen und/oder Polyvinyl(iso)acetalen aufgebaut ist und gute Dämpfungseigenschaften für Schall aufweist.

Die Erfindung betrifft ein z.B. als Zwischenschicht in Verbundsicherheitsgläsern geeignetes Folienlaminat, das aus mindestens drei Schichten auf der Basis von weichmacherhaltigen Polyvinyl(n)acetalen und/oder Polyvinyl(iso)acetalen aufgebaut ist und gute Penetrationseigenschaften aufweist.

### Stand der Technik

Verbundsicherheitsgläser bestehen im Allgemeinen aus zwei Glasscheiben und einer die Glasscheiben verbindenden Zwischenfolie. Als Folienmaterial wird überwiegend weichmacherhaltiges Polyvinylbutyral (PVB) verwendet, erhältlich aus der Umsetzung von Polyvinylalkohol mit n-Butyraldehyd.

Ein immer wichtiger werdendes Merkmal von Verbundverglasungen sind deren schalldämmende Eigenschaften, die durch entsprechende Zwischenschichtfolien eingestellt werden können.

Hierzu werden häufig Zwischenfolien mit 2 bis 5 Teilschichten eingesetzt, wobei sich die Teilschichten in ihren mechanischen Festigkeiten unterscheiden und so durch mechanische Entkopplung eine Schalldämmung erreicht wird.

Unterschiedliche mechanische Festigkeiten von Folien basierend auf weichmacherhaltigem Polyvinylacetal können z.B. durch deren Weichmachergehalt oder den Anteil an Polyvinylalkohol- oder Polyvinylacetatgruppen im eingesetzten Polyvinylacetal eingestellt werden.

Allgemein kann die mechanische Festigkeit von PVB-Folien durch deren Weichmachergehalt oder den Anteil an Polyvinylalkohol-oder Polyvinylacetatgruppen im eingesetzten Polyvinylacetal eingestellt werden.

So beschreiben z.B. US 5,340,654 oder WO 2006/102049 Mehrschichtsysteme, bei dem eine erste Schicht ein Polyvinylbutyral mit einem hohen Restacetatgehalt und eine zweite Schicht mit einem Polyvinylbutyral mit einem niedrigen Restacetatgehalt enthält.

Analog beschreibt WO 2008/137367 Mehrschichtsysteme bei denen sich die Teilschichten aus Polyvinylbutyral in ihrem Polyvinylalkoholgehalt unterscheiden.

Durch die unterschiedlichen Restacetatgehalte bzw. unterschiedlichen Anteile an Polyvinylalkoholgruppen weisen die Teilschichten einen unterschiedlichen Weichmachergehalt und damit unterschiedliche mechanische Festigkeiten auf. Hierdurch wird eine mechanische Entkopplung und damit eine verbesserte Schalldämmung erreicht.

Die bekannten Mehrschichtfolien basieren auf Polyvinylbutyral, das durch Umsetzung von Polyvinylalkohol mit n-Butyraldehyd erhältlich ist. Bei Verwendung von Polyvinyl(n)butyralen mit unterschiedlichen Polyvinylalkohol- oder acetatgehalten in ergeben sich unterschiedliche Weichmachergehalte der Schichten. Dies hat unterschiedliche mechanische Eigenschaften der Schichten zur Folge, die umso größer sind, je größer die Schalldämmung des Laminats ist. Gute Schalldämmung hat in der Regel schlechte mechanische Eigenschaften zur Folge. Zudem sind die Schichten inkompatibel d.h. weisen kaum mechanische Bindung zu einander auf und können von einander abgleiten. Inkompatible Schichten sind nicht mehr mit einander mischbar, sodass diese Folienlaminate nur schlecht in den Prozess recycelt werden können.

Aufgabe der vorliegenden Erfindung war es daher, Folienlaminate mit schalldämmenden Eigenschaften herzustellen, die durch die Auswahl der eingesetzten weichmacherhaltigen Polyvinylacetale eine hohe Weichmacherverträglichkeit und dennoch eine gute Schalldämmung aufweisen.

Es wurde überraschend gefunden, dass Folienlaminate, die zumindest eine Schicht auf Basis von Polyvinyl(iso)acetal enthalten, eine gute Weichmacherverträglichkeit und durch unterschiedliche mechanische Festigkeiten gute Dämpfungseigenschaften aufweisen.

Folienlaminate ohne Verwendung von Polyvinyl(iso)acetal sind z.B. aus WO 2006/102049 A1, WO 2011/078314 A1, WO 2011/081190 A1, WO 2011/024788 A1, US 2007014976 und JP 2011042552 bekannt. Die vorteilhaften Eigenschaften von Polyvinyl(iso)acetal sind hier nicht beschrieben.

Gegenstand der vorliegenden Erfindung sind daher Folienlaminate, aufgebaut aus mindestens drei Schichten A, B und C jeweils enthaltend mindestens einem Weichmacher und mindestens ein Polyvinylacetal, wobei
- die beiden äußeren Schichten A und C mindestens ein, jeweils gleiches oder unterschiedliches Polyvinylacetal mit einem Anteil an Polyvinylalkoholgruppen von 18.5 - 23 Gew. % enthalten
- mindestens eine innere Schicht B mindestens ein Polyvinylacetal mit einem Anteil an Polyvinylalkoholgruppen von 12 - 18 Gew.% enthält und
- zumindest eine der Schichten A, B oder C mindestens ein Polyvinyl(iso)acetal enthält.

Bevorzugt enthält das erfindungsgemäße Folienlaminat zumindest eine, insbesondere zwei Schichten, enthaltend mindestens ein Polyvinyl(n)acetal. Entsprechend kann das erfindungsgemäße Folienlaminat zumindest eine, insbesondere zwei Schichten, enthaltend mindestens ein Polyvinyl(iso)acetal aufweisen.

In diesen Varianten der Erfindung kann das Folienlaminat so aufgebaut sein das beiden äußeren Schichten A und C mindestens ein, jeweils gleiches oder unterschiedliches Polyvinyl(iso)acetal und die innere Schicht B mindestens ein Polyvinyl(n)acetal enthalten. Alternativ können die beiden äußeren Schichten A und C mindestens ein, jeweils gleiches oder unterschiedliches Polyvinyl(n)acetal und die innere Schicht B mindestens ein Polyvinyl(iso)acetal enthalten.

In einer weiteren Ausführungsform der Erfindung kann das erfindungsgemäße Folienlaminat nur aus Schichten A, B und C enthaltend mindestens ein Polyvinyl(iso)acetal aufgebaut sein, d.h. die beiden äußeren Schichten A und C enthalten mindestens ein, jeweils gleiches oder unterschiedliches Polyvinyl(iso)acetal und die innere Schicht B ein mindestens zu den Schichten A und C unterschiedliches Polyvinyl(iso)acetal.

Die Schalldämmungswirkung des erfindungsgemäßen Folienlaminats wird anhand der Dämpfungseigenschaften gemäß ISO 16940:2008 an einem Testkörper aus einer 0,8 mm dicken Zwischenschichtfolie, die zwischen zwei 2 mm dicken Glasscheiben laminiert wurde. Es wurde jeweils die 1. Mode bestimmt.

Die Schalldämmungswirkung der erfindungsgemäßen Folienlaminate Folien sollte bei den Anwendungstemperaturen des späteren Glaslaminats am höchsten sein. Bei Automobilverglasungen liegen die Anwendungstemperaturen bei ca. 20 °C, da die Scheibe im Winter geheizt und im Sommer durch Klimaanlagen gekühlt wird. Erfindungsgemäße Folien weisen in der genannten Messanordnung bevorzugt im Temperaturbereich von 17,5-22,5°C maximale Dämpfung auf, hier insbesondere Dämpfungswerte von über 19%, bevorzugt von über 20% und besonders bevorzugt von über 23%.

Die erfindungsgemäß eingesetzten Schichten enthalten Polyvinylacetale, die durch Acetalisierung von Polyvinylalkoholen mit jeweils "n"- (d.h. linearen Verbindungen) oder "iso"-Aldehyden bzw -Ketoverbindungen (d.h. verzweigten Verbindungen) erhalten werden.

Bevorzugt resultieren die erfindungsgemäß verwendeten Polyvinyl(iso)acetale aus der Umsetzung von mindestens einem Polvinylalkohol mit einer oder mehreren aliphatischen Ketoverbindung mit 4 bis 10 Kohlenstoffatomen mit mindestens einer Verzweigung an der alpha- oder beta-Position zur Ketogruppe. Die zur Herstellung der Polyvinyl(iso)acetale eingesetzten aliphatischen Ketoverbindungen können in verschiedenen Schichten gleich oder unterschiedlich sein. Bevorzugt sind die aliphatischen Ketoverbindungen zur Herstellung der Polyvinyl(iso)acetale in verschiedenen Schichten identisch; besonders bevorzugt sind die Polyvinyl(iso)acetale in verschiedenen Schichten chemisch identisch d.h. weisen gleiche Anteile an Polyvinyalkohol- und Polyvinylacetatgruppen sowie Polymerisationsgrad auf. Insbesondere wird zur Herstellung der Polyvinyl(iso)acetale iso-Butyraldehyd verwendet.

Es ist bei der Herstellung der erfindungsgemäß verwendeten Polyvinyl(iso)acetale auch möglich, neben den beschriebenen verzweigeten Ketoverbindungen zusätzlich ein oder mehrere unverzweigte aliphatische Ketoverbindungen mit 2 - 10 Kohlenstoffatomen zur Acetalisierung einzusetzen. Bevorzugt wird ein Gemisch aus n-Butyraldehyd und/oder Acetaldehyd mit iso-Butyraldehyd verwendet. Der Anteil an Acetalgruppen im Polyvinyl(iso)acetal, die aus verzweigten Ketoverbindungen resultieren, sollte über 60 Mol%, bevorzugt über 80 Mol% der Summe aus verzweigten und unverzweigten Acetalgruppen liegen.

Das erfindungsgemäß verwendete Polyvinyl(n)acetal resultiert insbesondere aus der Umsetzung von mindestens einem Polvinylalkohol mit einer oder mehreren aliphatischen unverzweigten Ketoverbindung mit 2 bis 10 Kohlenstoffatomen. Bevorzugt wird hierzu n-Butyraldehyd verwendet.

Es ist bei der Herstellung der erfindungsgemäß verwendeten Polyvinyl(n)acetale auch möglich, neben den beschriebenen unverzweigeten Ketoverbindungen zusätzlich ein oder mehrere verzweigte aliphatische Ketoverbindungen mit 4 - 10 Kohlenstoffatomen zur Acetalisierung einzusetzen. Bevorzugt wird ein Gemisch aus n-Butyraldehyd und/oder Acetaldehyd mit iso-Butyraldehyd verwendet. Der Anteil an Acetalgruppen im Polyvinyl(n)acetal, die aus unverzweigten Ketoverbindungen resultieren, sollte über 60 Mol%, bevorzugt über 80 Mol% der Summe aus verzweigten und unverzweigten Acetalgruppen liegen.

Die zur Herstellung der Polyvinylacetale (Polyvinyl(iso)- und Polyvinyl(n)acetale) in verschiedenen Schichten verwendeten Polyvinylalkohole können jeweils gleich oder unterschiedlich, rein oder eine Mischung von Polyvinylalkoholen mit unterschiedlichem Polymerisationsgrad oder Hydrolysegrad sein.

Der Polyvinylacetatgehalt der Polyvinylacetale (Polyvinyl(iso)- und Polyvinyl(n)acetale) in verschiedenen Schichten kann durch Verwendung eines zu einem entsprechenden Anteil hydrolisierten Polyvinylalkohols eingestellt werden. Durch den Polyvinylacetatgehalt wird die Polarität des Polyvinylacetals beeinflusst, wodurch sich auch die Weichmacherverträglichkeit und die mechanische Festigkeit der jeweiligen Teilfolie ändern. Es ist auch möglich, die Acetalisierung der Polyvinylalkohole mit einem Gemisch aus mehreren Aldehyden oder Ketoverbindungen durchzuführen.

Bevorzugt enthalten die Schichten Polyvinyl(iso)acetale bzw. Polyvinyl(n)acetale mit einem Anteil an Polyvinylacetatgruppen bezogen auf die Schichten jeweils gleich oder unterschiedlich 0.1 bis 15 Gew.%, bevorzugt 0,1 bis 8 Gew.% und insbesondere 0,1 bis 3 Gew.% betragen. Ganz besonders bevorzugt ist ein Anteil an Polyvinylacetatgruppen von 0,1 bis 2 Gew.%.

Bevorzugt enthalten die Schichten A und C Polyvinyl(iso)acetale bzw. Polyvinyl(n)acetale mit einem Anteil an Polyvinylalkohlgruppen bezogen auf die Schichten jeweils gleich oder unterschiedlich von 19,0 bis 21 Gew.%. Bevorzugt enthalten die Schichten B Polyvinyl(iso)acetale bzw. Polyvinyl(n)acetale mit einem Anteil an Polyvinylalkohlgruppen bezogen auf die Schichten von 14,0 bis 16,0 Gew.% oder von 16,1 bis 18 Gew.%.

Die Schichten enthalten bevorzugt unvernetztes Polyvinyl(iso)acetal bzw. Polyvinyl(n)acetal. Der Einsatz von vernetzten Polyvinyl(iso)acetalen und/oder vernetztem Polyvinyl(n)acetalen ist ebenso möglich. Verfahren zur Vernetzung von Polyvinylacetalen sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben.

Besonders bevorzugt ist der Einsatz von vernetzten Polyvinyl(iso)acetalen und/oder vernetztem Polyvinyl(n)acetalen in der inneren Schicht B. Hier wird insbesondere vernetztes Polyvinyl(iso)acetalen und/oder vernetztes Polyvinyl(n)acetale verwendet, das im Vergleich zu dem jeweiligen unvernetzten Material eine um 25 bis 200 % vergrößerte Lösungsviskosität aufweist. So kann z.B. das unvernetzte Material eine Lösungsviskosität von 80 mPas und das vernetzte Material eine Lösungsviskosität von 100 - 250 mPas aufweisen. Zur Herstellung von vernetzten Polyvinyl(iso)acetalen und Polyvinyl(n)acetalen bietet sich die Coacetalisierung von Polyvinylalkoholen mit einem Gemisch aus den genannten Ketoverbindungen und Di- oder Trialdehyden wie z.B. Glutardialdehyd gemäß WO 03/020776 A1 an.

Die in den Schichten A, B und C eingesetzten Polyvinylacetale (Polyvinyl(iso)acetal oder Polyvinyl(n)acetal) können einen gleichen oder unterschiedlichen mittleren Polymerisationsgrad aufweisen, der unterhalb von 3000 liegt. zwischen 200 und 2800 liegt. Bevorzugt weisen die in den Schichten A, B und C eingesetzten Polyvinylacetale (Polyvinyl(iso)acetal oder Polyvinyl(n)acetal) einen mittleren Polymerisationsgrad zwischen und 900 und 2500 auf.

Allgemein sinkt die Verträglichkeit von Weichmacher und Polyvinylacetalen mit der Abnahme des polaren Charakters des Weichmachers. So sind Weichmacher höherer Polarität mit Polyvinylacetal besser verträglich als solche mit niedrigerer Polarität. Alternativ steigt die Verträglichkeit von Weichmachern geringer Polarität mit Zunahme des Acetalisierungsgrades, d.h. mit Abnahme der Anzahl an Hydroxygruppen und damit der Polarität des Polyvinylacetals.

Auf Grund der unterschiedlichen Polyvinylacetal-Gruppen (n und iso) der Schichten können diese bei gleicher Anzahl an Polyvinylalkoholgruppen unterschiedliche Mengen von Weichmachern aufnehmen, ohne dass es zum Ausschwitzen oder Migrieren des Weichmachers kommt. Unterschiedliche Mengen von Weichmacher haben auch unterschiedliche mechanische Eigenschaften der Schichten zur Folge, sodass die mechanischen Eigenschaften der Schichten und damit des Folienlaminats über die Auswahl der Weichmacher und/oder des Polyvinylalkoholgehalts der eingesetzten Polyvinylacetale eingestellt werden können

Die Schichten können jeweils gleiche oder unterschiedliche Weichmacher (erste, zweite oder dritte) enthalten. Bevorzugt ist der Einsatz von chemisch gleichen Weichmachern in allen Schichten.

Die Schichten können Weichmacher oder Weichmachermischungen aus mindestens einem der folgenden, für PVB-Folie bekannten Weichmacher enthalten:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyladipaten, Diisononyladipat, Heptylnonyladipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat, Estern der Cyclohexandicarbonsäure wie etwa 1,2-Cyclohexandicarbonsäurediisononylester
- Ester oder Ether von mehrwertigen aliphatischen oder aromatischen Alkoholen oder Oligoetherglykolen mit einem oder mehreren unverzweigten oder verzweigten aliphatischen oder aromatischen Substituenten, wie z.B. Estern von Di-, Tri- oder Tetraglykolen mit linearen oder verzweigten aliphatischen oder cycloaliphatischen Carbonsäuren; Als Beispiele für letztere Gruppe können dienen Diethylenglykol-bis-(2-ethylhexanoat), Triethylenglykol-bis-(2-ethyl-hexanoat), Triethylenglykol-bis-(2-ethylbutanoat), Tetraethylenglykol-bis-n-heptanoat, Triethylenglykol-bis-n-heptanoat, Triethylenglykol-bis-n-hexanoat, Tetraethylenglykoldimethylether und/oder Dipropylenglykolbenzoat
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure

Besonders bevorzugt wird ein oder mehrere der folgenden Weichmacher verwendet: Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat

Zusätzlich können die Schichten weitere Zusätze enthalten wie Restmengen an Wasser, UV-Absorber, Antioxidantien, Haftungsregulatoren, optische Aufheller, Stabilisatoren, Farbmittel, Verarbeitungshilfs-mittel, organische oder anorganische Nanopartikel, pyrogene Kieselsäure und/oder oberflächenaktive Stoffe.

In einer Variante der Erfindung weisen alle Schichten die genannten Additive in weitgehend der gleichen Konzentration auf. In einer besonderen Variante der Erfindung weist zumindest eine der Schichten keine Haftungsregulatoren (Antihaftmittel) auf. Als Antihaftmittel werden im Rahmen der vorliegenden Erfindung Verbindungen verstanden, mit der die Haftung von weichmacherhaltigen Polyvinylacetalfolien an Glasoberflächen eingestellt werden kann. Verbindungen dieser Art sind dem Fachmann bekannt; in der Praxis werden hierzu häufig Alkali- oder Erdalkalimetallsalze von organischen Säuren, wie z.B. Kalium/Magnesiumacetat eingesetzt.

Es ist ebenso möglich, dass mindestens eine der Schichten zur Verbesserung der Steifigkeit 0,001 bis 20 Gew.% SiO₂, bevorzugt 1 bis 15 Gew.%, insbesondere 5 bis 10 Gew.%, ggf. gedopt mit Al₂O₃ oder ZrO₂ enthält.

Die Schichten innerhalb des Folienlaminats können in nahezu beliebiger Dicke verwendet werden, sofern sich die Schallschutzeigenschaften nicht negativ verändern. So können alle Schichten die gleiche Dicke aufweisen, es sind aber auch Kombinationen von Schichten unterschiedlicher Dicke möglich. Bei der bevorzugten Anordnung des erfindungsgemäßen Folienlaminates als Dreifachverbund besitzen die außen liegenden Schichten A und C weitgehend die gleiche Dicke, während die schalldämmende Schicht B so dünn wie möglich sein kann. So kann die schalldämmende Schicht B bei einer Gesamtdicke des Folienlaminats von 0,76 mm eine Dicke von 0,05 bis 0,20 mm besitzen.

Erfindungsgemäße Folienlaminate weisen bevorzugt die industriell üblichen Gesamtdicken von z.B. 0,38, 0,76, 1,14 mm (d.h. Vielfache von 0,38 mm) auf.

Zur Herstellung der erfindungsgemäßen Folienlaminate können die Schichten zunächst einzeln durch Extrusion hergestellt und anschließend mechanisch z.B. durch gemeinsames Aufrollen auf einen Folienwickel zur erfindungsgemäßen Zwischenschichtfolie zusammengefügt werden. Es ist auch möglich, die Folienlaminate durch gleichzeitige Coextrusion der Schichten herzustellen. Die Coextrusion kann z.B. mit einer entsprechend ausgestatteten Mehrschichtdüse oder einem Feed-Block erfolgen.

Im Automobilbereich werden häufig Folien verwendet, die im oberen Bereich ein sog. Farbband aufweisen. Hierzu kann entweder der obere Teil der Folie mit einer entsprechend eingefärbten Polymerschmelze coextrudiert werden oder es kann in einem Mehrschichtsystem eine der Schichten eine unterschiedliche Färbung aufweisen. In der vorliegenden Erfindung ist dies durch ganz oder teilweises Einfärben zumindest einer Schicht realisierbar.

Die Herstellung der erfindungsgemäßen Folienlaminate bzw. Schichten folgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit liefern.

Alternativ kann einem bereits hergestellten erfindungsgemäßen Folienlaminat durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Verbundglasherstellung auf und werden bevorzugt im Automobilbereich eingesetzt. Erfindungsgemäße Folienlaminate weisen unabhängig vom Herstellverfahren eine einseitig oder besonders bevorzugt beidseitig aufgebrachte Oberflächenstruktur mit einer Rauhigkeit R_{Z} von 15 bis 150 µm, bevorzugt R_{Z} von 15 bis 100 µm, besonders bevorzugt R_{Z} von 20 bis 80 µm und insbesondere R_{Z} von 40 bis 75 µm auf.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

Erfindungsgemäße Folienlaminate sind zur Herstellung von Glas/Folienlaminat/Glas, Glas/Folienlaminat/Kunststoff- oder Kunststoff/Folienlaminat/Kunststoff-Verbünden gut geeignet. Als Kunststoffscheiben werden insbesondere solche aus Polycarbonat, PET oder PMMA eingesetzt.

Besonders geeignet sind die Folienlaminate zur Herstellung von Glas/Folienlaminat/Glas, Glas/Folienlaminat/Kunststoff- oder Kunststoff/Folienlaminat/Kunststoff-Verbünden für Kraftfahrzeuge, Flugzeuge, Schiffe, Architekturverglasungen, Fassadenbauteilen oder zur Herstellung von Photovoltaikmodulen

Die erfindungsgemäßen Folienlaminate können insbesondere zur Herstellung von Verbundsicherheitsgläsern durch Laminieren mit einer oder mehreren Glasscheiben in dem Fachmann bekannter Weise verwendet werden. Die Verbundsicherheitsgläser können im Automobilbereich, z.B. als Windschutzscheibe, als auch im Architekturbereich z.B. in Fenstern oder transparenten Fassadenbauteilen oder im Möbelbau verwendet werden.

Für Windschutzscheiben mit HUD Funktionalität ist es vorteilhaft, mindestens einer der Schichten A, B oder C mit einem keilförmigen Querschnitt zu versehen. Insbesondere können die Schicht B einen keilförmigen, die Schichten A und C einen gleichförmigen (planparallelen) Querschnitt aufweisen.

### Messmethoden

Die Bestimmung des Polyvinylalkohol- und Polyvinylacetat-gehaltes von PVB erfolgt gemäß ASTM D 1396-92. Der Acetalysierungsgrad (= Butyralgehalt) kann als der zu Hundert fehlende Teil aus der gemäß ASTM D 1396-92 bestimmten Summe aus Polyvinylalkohol- und Polyvinylacetatgehalt berechnet werden. Die Umrechnung von Gew.% in Mol.% erfolgt gemäß dem Fachmann bekannten Formeln.

Der Weichmachergehalt der Folien wird durch Lösen der Folie in Ethanol und anschließende quantitative Gaschromatographie ermittelt. Um den Weichmachergehalt der Teilfolien zu ermitteln müssen die Mehrschichtfolien nach einer Konditionierungszeit von ca. 1 Woche d.h. nach weitgehendem Abschluss der Weichmachermigration wieder getrennt und einzeln vermessen werden.

### Messung des Dämpfungsverhaltens

Die Dämpfungseigenschaften der Folien werden durch Messung der mechanischen Impedanz gemäß ISO 16940:2008 bestimmt. Dazu werden die Folien zwischen zwei Glasscheiben der Dicke 2 mm laminiert und hieraus ein Probenstück mit den Abmessungen 300*25 mm ausgeschnitten. Auf diese Glasprobe wird mit Hilfe eines Cyanoacrylatklebers in der Mitte eine Klebkopfschraube (Typ UA0866/Fa. Brüel&Kjaer) aufgebracht, welche es ermöglicht, die Probe über ein Gewinde direkt mit einem Impedanzmesskopf (Typ 8001/Fa. Brüel&Kjaer GmbH) zu verbinden. Dieser ermöglicht die gleichzeitige Messung von Kraft und Beschleunigung an einem Punkt der Glasprobe über einen Frequenzbereich von 1-10000 Hz. Der Impedanzmesskopf befindet sich dabei direkt auf dem Schwingtisch eines Schwingerregers (Typ 4809/Fa. Brüel&Kjaer GmbH), über welchen die gewünschten Kräfte übertragen werden. Beide befinden sich in einem regelbaren, isolierten Heizschrank (Fa. Binder), welcher die Bestimmung der Dämpfungseigenschaften über einen Temperaturbereich von bevorzugt 0-40°C ermöglicht. Nun wird mithilfe eines Rauschsignalerzeugers (PULSE Frontend Type 3560B-040/Fa. Brüel&Kjaer GmbH), welcher zugleich auch als Signalempfänger fungiert, ein Rauschen erzeugt. Das Rauschen wird über einen Leistungsverstärker (Typ2718/Fa. Brüel&Kjaer GmbH) auf den Schwingerreger geleitet. Der Frequenzbereich umfasst dabei 0 bis 5000 Hz. Die Reaktion der Glasprobe auf die erzeugten Schwingungen kann nun bei unterschiedlichen Temperaturen direkt über den Impedanzmesskopf mittels Kraft/Beschleunigungsaufnahme gemessen und mit einer Analysensoftware (PULSE FFT Analysis Typ7770N2/Fa. Brüel&Kjaer GmbH) ausgewertet werden. Aus der ermittelten Übertragungsfunktion aus Kraft und Beschleunigung lassen sich die verschiedenen Eigenfrequenzen *f* der Schwingungsmoden n der Glasproben, sowie deren Halbwertsbreiten ermitteln. Dabei wird die Halbwertsbreite Δ*f* bei 3dB unterhalb des Signalsmaximums gewählt. Über die Beziehung η = Δ*f*/*f* lässt sich der Verlustfaktor η bzw. die Dämpfung bei den unterschiedlichen Eigenfrequenzen bestimmen. Ein hoher Verlustfaktor bzw. ein hoher prozentualer Dämpfungswert sind ein Maß für die Güte der Schalldämpfungseigenschaften. Dabei ist eine möglichst breite Dämpfungskurve im betrachteten Temperaturbereich von 0 - 40°C von Interesse.

Da die Dämpfungseigenschaften eines Materials von der Temperatur abhängt, wurden die Proben im ausgewählten Temperaturbereich in einem 5°C-Intervall gemessen, welcher im Prinzip den Anwendungsbereich des Schall absorbierenden Glases abdeckt.

### Messung der Zugeigenschaften der Folien

Die Werte für die Reißfestigkeiten und Reißdehnungen der Folie wurden mittels Zugprüfmaschine (Fa.TIRA) gemäß ISO 527 bei einer Geschwindigkeit von 200 mm/min bestimmt.

### Beispiele:

### 1) Allgemeine Synthesevorschrift für Polyvinyl(n)acetal

100 Gewichtsteile des Polyvinylalkohols Mowiol 28-99 (Handelsprodukt von Kuraray Europe GmbH) wurden in 975 Gewichtsteilen Wasser unter Erwärmen auf 90 °C gelöst. Es wurden bei einer Temperatur von 40 °C 57,5 Gewichtsteile n-Butyraldehyd und bei einer Temperatur von 12 °C unter Rühren 75 Gewichtsteile 20 %ige Salzsäure zugegeben. Die Mischung wurde nach Ausfallen des Polyvinylbutyrals (PVB) auf 73°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 20,3 Gew.% und einem Polyvinylacetatgehalt von 0,9 Gew.% erhalten.

### 2) Synthesevorschrift für Polyvinyl(n)acetal mit einem Polyvinylalkoholgehalt von 14,1 Gew.%

100 Gewichtsteile des Polyvinylalkohols Mowiol 30-92 (Handelsprodukt von Kuraray Europe GmbH mit einem mittleren Polymerisationsgrad von 2100) wurden in 975 Gewichtsteilen Wasser unter Erwärmen auf 90 °C gelöst. Es wurden bei einer Temperatur von 40 °C 56,8 Gewichtsteile n-Butyraldehyd und 0,06 Gewichtsteile Glutardialdehyd b bei einer Temperatur von 12 °C unter Rühren 100 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt.

Das PVB wurde nach Abkühlen auf Raumtemperatur abgetrennt, mit Wasser neutral gewaschen und getrocknet. Es wurde ein PVB mit einem Polyvinylalkoholgehalt von 14,1 Gew.% und einem Polyvinylacetatgehalt von 8,8 Gew.% erhalten.

### 3) Synthesevorschrift für Polyvinyl(n)acetal mit einem Polyvinylalkoholgehalt von 15,1 Gew.%

100 Gewichtsteile des Polyvinylalkohols Mowiol 30-92 (Handelsprodukt von Kuraray Europe GmbH mit einem mittleren Polymerisationsgrad von 2100) wurden in 975 Gewichtsteilen Wasser unter Erwärmen auf 90 °C gelöst. Es wurden bei einer Temperatur von 40 °C 55,5 Gewichtsteile n-Butyraldehyd und 0,06 Gewichtsteile Glutardialdehyd b bei einer Temperatur von 12 °C unter Rühren 100 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 15,1 Gew.% und einem Polyvinylacetatgehalt von 8,5 Gew.% erhalten.

### 4) Synthesevorschrift für Polyvinyl(iso)acetal mit einem Polyvinylalkoholgehalt von 14,4 Gew.%

100 Gewichtsteile des Polyvinylalkohols Mowiol 30-92 (Handelsprodukt von Kuraray Europe GmbH) wurden in 975 Gewichtsteilen Wasser unter Erwärmen auf 90 °C gelöst. Es wurden bei einer Temperatur von 40 °C 68,6 Gewichtsteile iso-Butyraldehyd und 0,06 Gewichtsteile Glutardialdehyd bei einer Temperatur von 12 °C unter Rühren 100 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 14,4 Gew.% und einem Polyvinylacetatgehalt von 8,7 Gew.% erhalten.

### 5) Synthesevorschrift für Polyvinyl(iso)acetal mit einem Polyvinylalkoholgehalt von 15,6 Gew.%

100 Gewichtsteile des Polyvinylalkohols Mowiol 30-92 (Handelsprodukt von Kuraray Europe GmbH) wurden in 975 Gewichtsteilen Wasser unter Erwärmen auf 90 °C gelöst. Es wurden bei einer Temperatur von 40 °C 67,6 Gewichtsteile iso-Butyraldehyd und 0,06 Gewichtsteile Glutardialdehyd bei einer Temperatur von 12 °C unter Rühren 100 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 15,6 Gew.% und einem Polyvinylacetatgehalt von 8,6 Gew.% erhalten.

### 6) Synthesevorschrift für Polyvinyl(iso)acetal mit einem Polyvinylalkoholgehalt von 16,4 Gew.%

100 Gewichtsteile des Polyvinylalkohols Mowiol 30-92 (Handelsprodukt von Kuraray Europe GmbH) wurden in 975 Gewichtsteilen Wasser unter Erwärmen auf 90 °C gelöst. Es wurden bei einer Temperatur von 40 °C 66,6 Gewichtsteile iso-Butyraldehyd und 0,06 Gewichtsteile Glutardialdehyd bei einer Temperatur von 12 °C unter Rühren 100 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 16,4 Gew.% und einem Polyvinylacetatgehalt von 8,5 Gew.% erhalten.

### 7) Synthesevorschrift für Polyvinyl(iso)acetal mit einem Polyvinylalkoholgehalt von 17,9 Gew.%

100 Gewichtsteile des Polyvinylalkohols Mowiol 30-92 (Handelsprodukt von Kuraray Europe GmbH) wurden in 975 Gewichtsteilen Wasser unter Erwärmen auf 90 °C gelöst. Es wurden bei einer Temperatur von 40 °C 60,8 Gewichtsteile iso-Butyraldehyd und 0,06 Gewichtsteile Glutardialdehyd bei einer Temperatur von 12 °C unter Rühren 100 Gewichtsteile 20 %ige Salzsäure zugegeben. Die Mischung wurde nach Ausfallen des Polyvinylbutyrals (PVB) auf 69°C erwärmt und bei dieser Temperatur für 2 Stunden gerührt. Das PVB wurde nach Abkühlen auf Raumtemperatur abgetrennt, mit Wasser neutral gewaschen und getrocknet. Es wurde ein PVB mit einem Polyvinylalkoholgehalt von 17,9 Gew.% und einem Polyvinylacetatgehalt von 8,6 Gew.% erhalten.

### Herstellung von Folien

Es wurden Folien aus Teilschichten der Zusammensetzung gemäß Tabelle 1 durch Zusammenlegen hergestellt. Als Weichmacher wurde 3G8 (Triethylenglycol) verwendet.

### Beispiele 1 bis 4 zeigen erfindungsgemäße Folien mit einem Aufbau

Polyvinyl(n)butyral/Polyvinyl(iso)butyral/Polyvinyl(n)butyral mit jeweils gleichem Polyvinylakohol- und Polyvinylacetatgehalt in den Außenschichten.

### Vergleichsbeispiel 1 und 2 zeigen nicht erfindungsgemäße Folien mit dem Aufbau

Polyvinyl(n)butyral/Polyvinyl(n)butyral/Polyvinyl(n)butyral mit dem angegebenen Polyvinylakohol- und Polyvinylacetatgehalt für die Innenschicht und die Außenschichten.
Tabelle 2 zeigt physikalische Daten der Folien. Es zeigt sich, dass erfindungsgemäße Folien bei 20°C eine bessere Dämpfung aufweisen als die Vergleichsbeispiele mit vergleichbarem PVA-Gehalt. Der PVA-Gehalt des eingesetzten Polyvinylacetals ist maßgeblich für das Dämpfungsverhalten der Folie. Eine Folie mit hohem PVA Gehalt zeigt in der Regel, bei gleichem WM-Gehalt, eine schlechtere Dämpfung bei gegebener Temperatur (hier 20°C) als eine Folie mit niedrigem PVA-Gehalt. In den Beispielen 3 und 4 zeigen erfindungsgemäße Folien jedoch auch noch bei hohen PVA Gehalten sehr gute Dämpfungseigenschaften bei 20°C. Dies liegt daran, dass durch eine verbesserte Weichmacherverträglichkeit erfindungsgemäßer Folien das Dämpfungsmaximum zu niedrigeren Temperaturen verschoben werden kann. Eine höhere Weichmacheraufnahme bedeutet in der Regel eine Verschlechterung der mechanischen Eigenschaften, z.B. Reißfestigkeiten, der Folie. Es zeigt sich jedoch, dass erfindungsgemäße Folien in den Beispielen 1 und 2 sogar verbesserte Reißfestigkeiten aufweisen als Vergleichsbeispiele 1 und 2 mit ähnlichem PVA-Gehalt.

**Tabelle 1**

| Beispiel | PVA-Gehalt des n-PVB Teilschicht A/C [Gew.%] | PVA-Gehalt des iso-PVB Teilschicht B [Gew.%] | PVA-Gehalt des n-PVB Teilschicht B [Gew.%] | Schichtdicke Teilschicht B [mm] | Schichtdicke Teilschicht A+B [mm] | WM-Gehalt Teilschicht A[Gew.%] | WM-GehaltTeilschicht B[Gew.%] |
|---|---|---|---|---|---|---|---|
| No.1 | 20,3 | 14.4 | | 0,2 | 0,8 | 27,5 | 37,5 |
| No.2 | 20,3 | 15.6 | | 0,2 | 0,8 | 27,5 | 37.5 |
| No.3 | 20,4 | 16.4 | | 0,2 | 0,8 | 27,5 | 37,5 |
| No.4 | 20,4 | 17.9 | | 0,2 | 0,8 | 27,5 | 37.5 |
| VB 1 | 20,4 | | 14.1 | 0,2 | 0,8 | 27,5 | 37,5 |
| VB 2 | 20,4 | | 15.1 | 0,2 | 0,8 | 27,5 | 37,5 |

**Tabelle 2**

| Beispiel | Dämpfung [%] der 1.mode bei 20°C | Resonanzfrequenz [Hz] der 1.mode bei 20°C | Reissfestigkeit [N/mm²] |
|---|---|---|---|
| No.1 | 23,5 | 154 | 21,2 |
| No.2 | 23,4 | 157 | 21,5 |
| No.3 | 20,7 | 164 | 20,9 |
| No.4 | 19 | 172 | 21,5 |
| VB 1 | 13,8 | 178 | 18,2 |
| VB 2 | 12,2 | 182 | 20,9 |

## Patentansprüche

1. Folienlaminat, aufgebaut aus mindestens drei Schichten A, B und C jeweils enthaltend mindestens einen Weichmacher und mindestens ein Polyvinylacetal **dadurch gekennzeichnet, dass**
- die beiden äußeren Schichten A und C mindestens ein, jeweils gleiches oder unterschiedliches Polyvinylacetal mit einem Anteil an Polyvinylalkoholgruppen von 18.5 - 23 Gew. % enthalten,
- mindestens eine innere Schicht B mindestens ein Polyvinylacetal mit einem Anteil an Polyvinylalkoholgruppen von 12 - 18 Gew.% enthält und
- zumindest eine der Schichten A, B oder C mindestens ein Polyvinyl(iso)acetal enthält.

2. Folienlaminat nach Anspruch 1 **dadurch gekennzeichnet, dass** zumindest eine Schicht A, B oder C mindestens ein Polyvinyl(n)acetal enthält.

3. Folienlaminat nach Anspruch 1 **dadurch gekennzeichnet, dass** die beiden äußeren Schichten A, C mindestens ein jeweils gleiches oder unterschiedliches Polyvinyl(iso)acetal und die innere Schicht B mindestens ein Polyvinyl(n)acetal enthalten.

4. Folienlaminat nach Anspruch 1 **dadurch gekennzeichnet, dass** die beiden äußeren Schichten A, C mindestens ein, jeweils gleiches oder unterschiedliches Polyvinyl(n)acetal und die innere Schicht B mindestens ein Polyvinyl(iso)acetal enthalten.

5. Folienlaminat nach Anspruch 1 **dadurch gekennzeichnet, dass** die beiden äußeren Schichten A, C mindestens ein, jeweils gleiches oder unterschiedliches Polyvinyl(iso)acetal und die innere Schicht B mindestens ein zu den Schichten A und C unterschiedliches Polyvinyl(iso)acetal enthalten.

6. Folienlaminat nach einem der Ansprüche 1 bis 5, **dadurch gekennzeichnet, dass** das Polyvinyl(iso)acetale aus der Umsetzung von mindestens einem Polvinylalkohol mit einer oder mehreren aliphatischen Ketoverbindung mit 4 bis 10 Kohlenstoffatomen mit mindestens einer Verzweigung an der alpha- oder beta-Position zur Ketogruppe resultieren.

7. Folienlaminat nach einem der Ansprüche 1 bis 5, **dadurch gekennzeichnet, dass** die Polyvinyl (n) acetale aus der Umsetzung von mindestens einem Polvinylalkohol mit einer oder mehreren aliphatischen, unverzweigten Ketoverbindung mit 2 bis 10 Kohlenstoffatomen resultieren.

8. Folienlaminat nach einem der Ansprüche 1 bis 7, **dadurch gekennzeichnet, dass** ein mit der Zwischenschichtfolie hergestellter Probenkörper aus 2 mm Glas/0,8 mm Zwischenschichtfolie/ 2 mm Glas gemäß ISO/PAS 16940 (Stand 16.7.2002) für die 1. Mode Dämpfungswerte im Temperaturbereich von 17,5-22,5°C von über 19% aufweist.

9. Folienlaminat nach einem der Ansprüche 1 bis 8, **dadurch gekennzeichnet, dass** das Folienlaminat durch Coextrusion der Schichten hergestellt wird.

10. Folienlaminat nach einem der Ansprüche 1 bis 8, **dadurch gekennzeichnet, dass** das Folienlaminat durch Zusammenlegen der Schichten hergestellt wird.

11. Verwendung der Folienlaminate nach einem der Ansprüche 1 bis 10 zur Herstellung von Glas/Folienlaminat/Glas-Verbünden für Kraftfahrzeuge, Flugzeuge, Schiffe, Architekturverglasungen, Fassadenbauteilen oder zur Herstellung von Photovoltaikmodulen.

## Claims

1. A film laminate, formed from at least three layers A, B and C, each containing at least one plasticiser and at least one polyvinyl acetal, **characterised in that**
- two outer layers A and C each contain at least one identical or different polyvinyl acetal having a proportion of polyvinyl alcohol groups of 18.5 - 23 % by weight,
- at least one inner layer B contains at least one polyvinyl acetal having a proportion of polyvinyl alcohol groups of 12 - 18 % by weight, and
- at least one of the layers A, B or C contains at least one polyvinyl (iso)acetal.

2. The film laminate according to Claim 1, **characterised in that** at least one layer A, B or C contains at least one polyvinyl (n) acetal.

3. The film laminate according to Claim 1, **characterised in that** the two outer layers A, C each contain at least one identical or different polyvinyl (iso)acetal and the inner layer B contains at least one polyvinyl (n) acetal.

4. The film laminate according to Claim 1, **characterised in that** the two outer layers A, C each contain at least one identical or different polyvinyl (n) acetal and the inner layer B contains at least one polyvinyl (iso)acetal.

5. The film laminate according to Claim 1, **characterised in that** the two outer layers A, C each contain at least one identical or different polyvinyl (iso)acetal and the inner layer B contains at least one polyvinyl (iso)acetal which is different from the polyvinyl (iso)acetal of layers A and C.

6. The film laminate according to one of Claims 1 to 5, **characterised in that** the polyvinyl (iso)acetals are obtained by reacting at least one polyvinyl alcohol with one or more aliphatic keto compounds containing 4 to 10 carbon atoms having at least one branch at the alpha or beta position to the keto group.

7. The film laminate according to one of Claims 1 to 5, **characterised in that** the polyvinyl (n) acetals are obtained by reacting at least one polyvinyl alcohol with one or more aliphatic, unbranched keto compounds containing 2 to 10 carbon atoms.

8. The film laminate according to one of Claims 1 to 7, **characterised in that** a sample produced with an intermediate-layer film, formed from 2 mm glass/0.8 mm intermediate-layer film/2 mm glass in accordance with ISO/PAS 16940 (as of 16.7.2002) has a first mode damping value of more than 19 % in the temperature range of 17.5 - 22.5 °C.

9. The film laminate according to one of Claims 1 to 8, **characterised in that** the film laminate is produced by co-extrusion of the layers.

10. The film laminate according to one of Claims 1 to 8, **characterised in that** the film laminate is produced by combining the layers.

11. Use of the film laminate according to one of Claims 1 to 10 for producing glass/film laminate/glass composites for motor vehicles, aircraft, ships, architectural glazings, façade components, or for the production of photovoltaic modules.

## Revendications

1. Stratifié de feuilles, constitué d'au moins trois couches A, B et C contenant chacune au moins un plastifiant et au moins un acétal de polyvinyle, **caractérisé en ce que**
- les deux couches extérieures A et C contiennent au moins un acétal de polyvinyle dont chacun est de nature identique ou différente et présente une proportion de groupes d'alcool polyvinylique comprise entre 18,5 et 23 % en poids,
- au moins une couche intérieure B contient au moins un acétal de polyvinyle dont la proportion an groupes d'alcool polyvinylique est comprise entre 12 et 18 % en poids, et
- au moins une des couches A, B ou C contient au moins un (iso)acétal de polyvinyle.

2. Stratifié de feuilles selon la revendication 1, **caractérisé en ce qu'**au moins une couche A, B ou C contient au moins un (n)acétal de polyvinyle.

3. Stratifié de feuilles selon la revendication 1, **caractérisé en ce que** les deux couches extérieures A, C contiennent au moins un (iso)acétal de polyvinyle dont chacun est de nature identique ou différente, et la couche intérieure B contient au moins un (n)acétal de polyvinyle.

4. Stratifié de feuilles selon la revendication 1, **caractérisé en ce que** les deux couches extérieures A, C contiennent au moins un (n)acétal de polyvinyle dont chacun est de nature identique ou différente, et la couche intérieure B contient au moins un iso(acétal) de polyvinyle.

5. Stratifié de feuilles selon la revendication 1, **caractérisé en ce que** les deux couches extérieures A, C contiennent au moins un (iso)acétal de polyvinyle dont chacun est de nature identique ou différente, et la couche intérieure B contient au moins un iso(acétal) de polyvinyle qui est différent par rapport aux couches A et C.

6. Stratifié de feuilles selon l'une des revendications 1 à 5, **caractérisé en ce que** les (iso)acétals de polyvinyle sont obtenus en faisant réagir au moins un alcool polyvinylique avec un ou plusieurs composés cétoniques aliphatiques renfermant 4 à 10 atomes de carbone et présentant au moins une ramification en position alpha ou bêta par rapport au groupe cétone.

7. Stratifié de feuilles selon l'une des revendications 1 à 5, **caractérisé en ce que** les (n)acétals de polyvinyle sont obtenus en faisant réagir au moins un alcool polyvinylique avec un ou plusieurs composés cétoniques aliphatiques linéaires renfermant 2 à 10 atomes de carbone.

8. Stratifié de feuilles selon l'une des revendications 1 à 7, **caractérisé en ce qu'**un échantillon, lequel est fabriqué en mettant en oeuvre le film intercalaire et lequel est constitué de 2 mm de verre / 0,8 mm de film intercalaire / 2 mm de verre selon ISO/PAS 16940 (dans sa version du 16/07/2002), présente en 1^{er} mode et dans une gamme de température comprise entre 17,5 et 22,5 °C des valeurs d'affaiblissement acoustique supérieures à 19 %.

9. Stratifié de feuilles selon l'une des revendications 1 à 8, **caractérisé en ce que** ledit stratifié de feuilles est fabriqué par co-extrusion desdits couches.

10. Stratifié de feuilles selon l'une des revendications 1 à 8, **caractérisé en ce que** ledit stratifié de feuilles est fabriqué par assemblage des couches.

11. Utilisation des stratifiés de feuilles selon l'une des revendications 1 à 10 pour fabriquer des éléments composites de type verre / stratifié de feuilles / verre destinés à des véhicules à moteur, des avions, des navires, des vitrages architecturaux, des composants de façade, ou pour fabriquer des modules photovoltaïques.
